# EUROPEAN PATENT SPECIFICATION

(11) **EP 4 303 976 B1**
(45) Date of publication and mention of the grant of the patent: **09.09.2026**
(21) Application number: 23740484.3
(22) Date of filing: 12.01.2023
(51) Int. Cl.: H01M 50/178, H01M 50/533, H01M 50/588, H01M 50/578, H01M 50/59

(54) **SECONDARY BATTERY, BATTERY PACK AND DEVICE INCLUDING THE SAME**
SEKUNDÄRBATTERIE, BATTERIEPACK UND VORRICHTUNG DAMIT
BATTERIE SECONDAIRE, BLOC-BATTERIE ET DISPOSITIF COMPRENANT CELUI-CI

(30) Priority: 13.01.2022 KR 20220005176
(43) Date of publication of application: 10.01.2024
(73) Proprietor: LG ENERGY SOLUTION, LTD., Seoul 07335 (KR)
(72) Inventor: KANG, Gyung-Soo, Daejeon 34122 (KR); LEE, Jae-Ho, Daejeon 34122 (KR); LIM, Hun-Hee, Daejeon 34122 (KR)
(74) Representative: Plasseraud IP
(86) International application number: PCT/KR2023/000609
(87) International publication number: WO 2023/136641

(56) References cited:
- JP-A- 2020 098 735
- KR-A- 20110 048 470
- KR-A- 20150 034 637
- KR-A- 20160 125 920
- KR-A- 20190 027 615
- US-B2- 10 147 916

## Description

### TECHNICAL FIELD

The present disclosure relates to a secondary battery, a battery pack and a device including the same, and more specifically, to a secondary battery having improved safety, a battery pack including the same, and a device including the battery pack.

The present application claims priority to Korean Patent Application No. 10-2022-0005176 filed on January 13, 2022.

### BACKGROUND ART

Mobile IT devices such as mobile phones, laptops, and tablet PCs are closely related to modern life, and with the growth of the IT industry market, demand for a secondary battery, which is a key component, is also increasing rapidly. The secondary battery is an eco-friendly battery technology that may be used repeatedly through charge/discharge and does not use harmful substances such as lead, nickel and cadmium, and has the advantage of high energy density that may store a lot of energy in a lightweight and small volume, thereby making it the core of the new growth engine industry in the future. In particular, a lithium secondary battery is most widely used as a power source for mobile IT, which is closely related to human life, and also has recently continued to expand its utilization as a power source for electric vehicles and a power storage device for renewable energy.

In general, a secondary battery is composed of a positive electrode, a negative electrode, a separator separating them, an electrolyte transferring lithium ions through the separator, a case accommodating them, and an electrode lead serving as a current path out of the case. In addition, it may further include a lead film, which is bonded to the electrode lead to prevent a short circuit between the electrode lead and the case, and serves to seal the electrode lead and the case.

Patent documents KR20150034637A, US2017117515A1 or US2019207196A1 provide examples of secondary batteries.

In the case of such a secondary battery, it tends to be vulnerable to internal pressure due to gas generated by the operation of the battery, and thus it is necessary to develop a secondary battery having sufficient rigidity to withstand such internal pressure.

### DISCLOSURE

### Technical Problem

The present invention is designed to solve the problems of the related art, and therefore the present invention is directed to providing a secondary battery having improved safety.

### Technical Solution

In order to solve the above problems, according to the present invention a secondary battery according to claim 1 is provided. Preferred embodiments are defined in the dependent claims.

The first region may be located at one end of the sealing portion in the inner direction of the case.

The second region may be located at one end of the sealing portion in the outer direction of the case.

The first region and the second region may be spaced apart from each other along the width direction of the sealing portion.

The lead film may be fused to the case in the first region and the second region, and may not be fused to the case in a region located between the first region and the second region.

The distance between the first region and the second region may be 20% to 80% of the width of the sealing portion.

The lead film may include a first lead film; and a second lead film provided separately from the first lead film.

The first lead film may be located relatively close to the direction in which the electrode assembly is accommodated, and the second lead film may be located relatively far from the direction in which the electrode assembly is accommodated.

The first region may be located in a region where the first lead film and the sealing portion overlap, and the second region may be located in a region where the second lead film and the sealing portion overlap.

A portion of the first lead film may be located at the end of the sealing portion in the inner direction of the case.

A portion of the second lead film may be located at the end of the sealing portion in the outer direction of the case.

The first lead film and the second lead film may be spaced apart from each other along the width direction of the sealing portion.

The second lead film may have a shape extending along the extension direction of the sealing portion.

The first lead film may have a shape extending along the direction forming a predetermined angle with the extension direction of the second lead film.

The angle that the first lead film forms with the second lead film may be 15° to 60°.

The extension length of the first lead film in a direction parallel to the extension direction of the electrode lead may be 10% to 80% of the width of the sealing portion.

The extension width of the second lead film in a direction parallel to the extension direction of the electrode lead may be 10% to 50% of the width of the sealing portion.

The extension length of the first region in a direction parallel to the extension direction of the electrode lead may be10% to 50% of the width of the sealing portion.

The extension width of the second region in a direction parallel to the extension direction of the electrode lead may be 10% to 50% of the width of the sealing portion.

A battery pack according to an embodiment of the present disclosure may include a secondary battery according to an embodiment of the present disclosure as described above.

A device according to an embodiment of the present disclosure may include a battery pack according to an embodiment of the present disclosure as described above.

### Advantageous Effects

A secondary battery according to an embodiment of the present disclosure may have enhanced rigidity against internal pressure, so safety may be improved.

### DESCRIPTION OF DRAWINGS

The accompanying drawings illustrate a preferred embodiment of the present disclosure and together with the foregoing disclosure, serve to provide further understanding of the technical features of the present invention, and thus the present invention is not construed as being limited to the drawing.
FIG. 1 is a view showing an electrode lead, a lead film, and a sealing portion of a secondary battery according to one embodiment of the present invention,
FIG.2 is a view showing an electrode lead, a lead film, and a sealing portion of a secondary battery according to another embodiment of the present invention,
FIG. 3 is a view showing an electrode lead, a lead film, and a sealing portion of a secondary battery according to still another embodiment of the present invention,

### BEST MODE

Hereinafter, preferred embodiments of the present invention will be described in detail with reference to the accompanying drawings.

A secondary battery according to the present invention is defined in claim 1. Preferred embodiments are defined in the dependent claims.

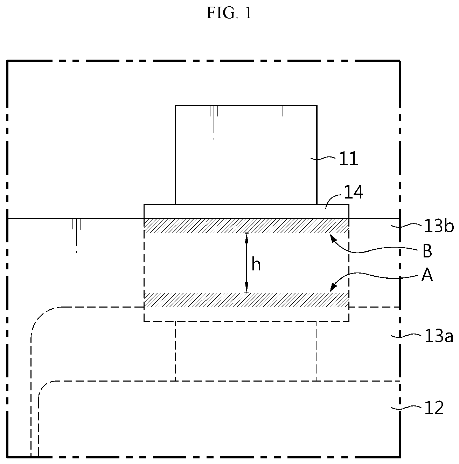

FIG. 1 is a view showing an electrode lead, a lead film, and a sealing portion of a secondary battery according to one embodiment of the present invention.

Referring to FIG. 1, a secondary battery 10 according to an embodiment of the present invention includes an electrode assembly 12 to which an electrode lead 11 is attached and a case.

The electrode assembly 12 includes a positive electrode plate, a negative electrode plate, and a separator. In the electrode assembly 12, a positive electrode plate and a negative electrode plate may be sequentially stacked with a separator interposed therebetween.

The positive electrode plate may be formed by including a positive electrode current collector made of a thin metal plate having excellent conductivity, for example, aluminum (Al) foil, and a positive electrode active material layer coated on at least one surface thereof. In addition, the positive electrode plate may include a positive electrode tab made of a metal material, such as aluminum (Al), at one end thereof. The positive electrode tab may extend and protrude from one end of the positive electrode plate, may be welded to one end of the positive electrode plate, or may be bonded by using a conductive adhesive.

The negative electrode plate may be formed by including a negative electrode current collector made of a conductive metal thin plate, for example, copper (Cu) foil, and a negative electrode active material layer coated on at least one surface thereof. In addition, the negative electrode plate may include a negative electrode tab made of a metal material, such as copper (Cu) or nickel (Ni), at one end thereof. The negative electrode tab may extend and protrude from one end of the negative electrode plate, may be welded to one end of the negative electrode plate, or may be bonded by using a conductive adhesive.

The separator may be interposed between the positive electrode plate and the negative electrode plate to electrically insulate the positive electrode plate and the negative electrode plate from each other, and may be formed in the form of a porous membrane that allows lithium ions or the like to pass between the positive electrode plate and the negative electrode plate. The separator may include, for example, a porous membrane using polyethylene (PE), polypropylene (PP), or a composite film thereof.

An inorganic coating layer may be provided on the surface of the separator. The inorganic coating layer may have a structure in which inorganic particles are bonded to each other by a binder to form an interstitial volume between the particles.

The electrode assembly 12 may include a jelly-roll (wound type) electrode assembly having a structure in which long sheet-shaped positive electrodes and negative electrodes are wound with a separator interposed therebetween, a stacked (stack type) electrode assembly in which a plurality of positive electrodes and negative electrodes cut in units of a predetermined size are sequentially stacked with a separator interposed therebetween, and a stack/folding type electrode assembly having a winding structure of bi-cells or full cells in which positive and negative electrodes of a predetermined unit are stacked with a separator interposed therebetween.

The case includes an accommodating portion 13a for accommodating the electrode assembly 12 and a sealing portion 13b formed to seal the electrode assembly 12.

The sealing portion 13b refers to, for example, a portion that is fused along the outer circumferential surface of the accommodating portion 13a to seal the electrode assembly 12, and the fusion may be thermal fusion or ultrasonic fusion, but is not particularly limited as long as the sealing portion may be fused.

In one embodiment of the present disclosure, the case may be provided in the form of a film having a multilayer structure of an outer layer for external impact protection, a metal barrier layer for blocking moisture, and a sealant layer for sealing the case.

The outer layer may include other polyester-based films such as poly(ethylene terephthalate) (PET), polybutylene terephthalate, polyethylene naphthalate, polybutylene naphthalate, copolymerized polyester, polycarbonate, nylon, and the like, and may be composed of a single layer or multiple layers.

The metal barrier layer may include aluminum, copper, or the like.

The sealant layer may include a sealant resin and may be composed of a single layer or multiple layers.

In one embodiment of the present disclosure, the sealant resin may include polypropylene (PP), acid modified polypropylene (PPa), random polypropylene, ethylene propylene copolymer, or two or more of these. The ethylene propylene copolymer may include ethylene-propylene rubber, ethylene-propylene block copolymer and the like, but is not limited thereto.

In one embodiment of the present disclosure, the case may be in the form of a pouch.

In one embodiment of the present disclosure, when the case is in the form of a pouch, it may include an upper pouch and a lower pouch. When the case includes an upper pouch and a lower pouch, outer circumferential surfaces of the upper pouch and the lower pouch are fused to each other by heat and pressure, thereby sealing the battery.

When the case is in the form of a pouch, the sealing portion 13b may be sealed on four sides or three sides at the edge of the case. The three-sided sealing structure means a structure in which the upper pouch and the lower pouch are formed into one pouch sheet, and then the boundary surfaces of the upper pouch and the lower pouch are bent so that the electrode assembly accommodating portions 13a formed in the upper pouch and the lower pouch are overlapped, and the edges of the remaining three sides except for the bent portions are sealed. Meanwhile, in the present disclosure, the sealing portion 13b may refer to an edge portion of the upper pouch and an edge portion of the lower pouch facing each other. That is, in the present disclosure, it is not necessary for the entirety of the edge of the upper pouch and the edge of the lower pouch facing each other to be fused, but it may be only partially fused.

Referring to FIG. 1, the electrode lead 11 may be accommodated in a case so that a portion thereof is exposed to the outside of the case.

Referring to FIG. 1, the secondary battery 10 according to the present invention includes a lead film 14.

The lead film 14 surrounds a portion of the outer surface of the electrode lead 11 and is interposed between the electrode lead 11 and the sealing portion 13b of the case where the electrode lead 11 protrudes. The lead film 14 may be located on at least one surface of the electrode lead 11. The lead film 14 is interposed between the electrode lead 11 and the sealing portion 13b of the case where the electrode lead protrudes to help bind the electrode lead 11 and the sealing portion 13b of the case. Sealing of the battery occurs on the surface where the lead film 14 is in contact with the sealing portion 13b.

Referring to FIG. 1, the lead film 14 may have, for example, a form extending parallel to the extension direction (left-right direction when viewed with reference to FIG. 1) of the sealing portion 13b located in the direction where the electrode lead 11 is drawn out.

In a secondary battery, a swelling phenomenon in which the battery swells in the process of repeated charging and discharging may occur, and it affects the safety of the battery. In the case of swelling, breakage may occur at the interface between the lead film and the sealing portion, which has a rather weak adhesion.

Referring to FIG. 1, the lead film 14 includes a first region A configured to be primarily broken during swelling of the battery and a second region B configured to be secondarily broken. As the first region A is broken before the second region B, it may be easy to control the swelling pressure. Accordingly, the safety of the battery may be improved by preventing an increase in swelling pressure. The first region A and the second region B refer to a region in which fusion is performed among the regions where the lead film 14 and the sealing portion 13b of the case overlap.

Even after the first region A is preferentially broken, the second region B is secondarily broken in the case of an increase in swelling pressure, thereby further preventing an increase in swelling pressure. When the second region B is broken, pressure inside the battery may be discharged to the outside, and thus it may be easier to control the swelling pressure.

At this time, the interface between the lead film 14 and the sealing portion 13b in the first region A is broken. In addition, the interface between the lead film 14 and the sealing portion 13b in the second region B is broken.

After primarily sealing the sealing portion 13b and the first region A of the lead film 14, the second region B of the lead film 14 may be secondarily sealed to form the first region A and the second region B that may be fused to the case on the lead film 14. Accordingly, a difference in sealing strength between the first region A and the second region B is provided, and thus the breakage timing of the first region A and the second region B may be adjusted. Of course, it is also possible to primarily seal the second region B and secondarily seal the first region A.

Referring to FIG. 1, the first region A is located relatively close to the direction in which the electrode assembly 12 is accommodated, and the second region B may be located relatively far from the direction in which the electrode assembly 12 is accommodated.

When swelling occurs, the sealing portion in the inner direction of the case is subjected to the most pressure. As the first region A is located closer to the inner direction of the case than the second region B, the first region A located relatively close to the inner direction of the case is more easily broken earlier than the second region B in the event of a swelling phenomenon.

In one embodiment of the present disclosure, a sensor unit (not shown) and a control unit (not shown) connected to the first region A and/or the second region B may be further included. The sensor unit may measure the swelling pressure and transmit it to the control unit, and the control unit may allow the first region A and/or the second region B to be broken when the pressure exceeds a specific threshold.

Referring to FIG. 1, the first region A is located at one end of the sealing portion 13b in the inner direction of the case, and the second region B is located at one end of the sealing portion 13b in the outer direction of the case. As the first region A is located at one end of the sealing portion 13b in the inner direction of the case, breakage preferentially occurs at one end of the sealing portion 13b in the inner direction of the case, which is a portion subjected to the most pressure as the swelling occurs, thereby making it easier to control the swelling pressure. As the second region B is located at one end of the sealing portion 13b in the outer direction of the case, the pressure inside the battery is discharged to the outside as the second region B is broken, thereby making it easier to control the swelling pressure.

Referring to FIG. 1, the first region A and the second region B may be spaced apart from each other along the width direction (up-down direction when viewed with reference to FIG. 1) of the sealing portion 13b. In this case, the lead film 14 is fused to the case in the first region A and the second region B, and is not fused to the case in the region located between the first region A and the second region B. Meanwhile, the distance h between the first region A and the second region B may be approximately 20% to 80% of the width of the sealing portion 13b. When the distance h between the first region A and the second region B satisfies the above-defined range, it may be easier to adjust the breakage timing of the first region A and the second region B.

Here, the distance h between the first region A and the second region B refers to the distance between the outermost end facing the outside of the case in the first region A and the innermost end facing the inside of the case in the second region B.

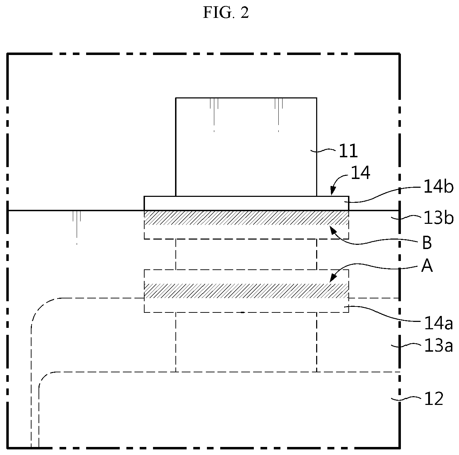

FIG. 2 is a view showing an electrode lead, a lead film, and a sealing portion of a secondary battery according to another embodiment of the present invention,

Referring to FIG. 2, the lead film 14 includes a first lead film 14a and a second lead film 14b provided separately from the first lead film 14a. The first lead film 14a and/or the second lead film 14b have a form extending parallel to the extension direction (left-right direction when viewed with reference to FIG. 1) of the sealing portion 13b located in the direction where the electrode lead 11 is drawn out. When the lead film 14 includes the first lead film 14a and the second lead film 14b, it may be easier to design the lead film 14 to secure a desired sealing strength.

Referring to FIG. 2, the first lead film 14a may be located relatively close to the direction in which the electrode assembly 12 is accommodated, and the second lead film 14b may be located relatively far from the direction in which the electrode assembly 12 is accommodated.

Referring to FIG. 2, the first region A is located in a region where the first lead film 14a and the sealing portion 13b overlap, and the second region B is located in a region where the second lead film 14b and the sealing portion 13b overlap.

In one embodiment of the present invention, after the interface between the first lead film 14a and the sealing portion 13b is primarily broken during swelling of the battery, the interface between the second lead film 14b and the sealing portion 13b is broken secondarily.

When the first lead film 14a is located closer to the inner direction of the case than the second lead film 14b, the first lead film 14a located relatively close to the inner direction of the case is more easily broken earlier than the second lead film 14b in the event of a swelling phenomenon.

Referring to FIG. 2, a portion of the first lead film 14a is located at the end of the sealing portion 13b in the inner direction of the case, and a portion of the second lead film 14b is located at the end of the sealing portion 13b in the outer direction of the case. At this time, a portion of the first lead film 14a located at the end of the sealing portion 13b in the inner direction of the case corresponds to the first region A, and a portion of the second lead film 14b located at the end of the sealing portion 13b in the outer direction of the case corresponds to the second region B.

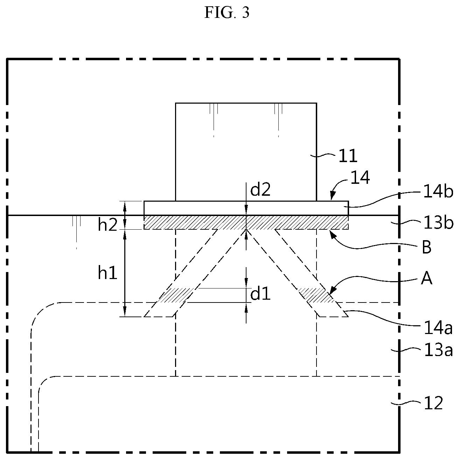

FIG. 3 is a view showing an electrode lead, a lead film, and a sealing portion of a secondary battery according to still another embodiment of the present invention,

Referring to FIG. 3, the second lead film 14b has a form extending along the extension direction (left-right direction when viewed with reference to FIG. 3) of the sealing portion 13b.

Referring to FIG. 3, the first lead film 14a has a shape extending along a direction forming a predetermined angle with the extension direction of the second lead film 14b. The first lead film 14a is connected to or spaced apart from the second lead film 14b.

In one embodiment of the present invention, the first lead film 14a may be in plurality.

In one embodiment of the present invention, when the first lead film 14a is in plurality, a portion of the plurality of first lead films 14a may overlap each other. When the first lead film 14a is provided in plurality, the pair of first lead films 14a may have shapes inclined in opposite directions so that they become away from each other toward the inner side of the case.

In one embodiment of the present disclosure, the angle that the first lead film 14a forms with the second lead film 14b may be approximately 15° to 60°.

When the first lead film 14a and the second lead film 14b have the above-described shapes, the contact area between the lead film 14 and the electrode lead 11 may be increased, and the contact area between the lead film 14 and the sealing portion 13b may also be increased, so that the adhesive strength between the electrode lead 11 and the sealing portion 13b may be increased, thereby increasing the sealing strength between the electrode lead 11 and the sealing portion 13b. As the sealing strength between the electrode lead 11 and the sealing portion 13b increases, the rigidity of the battery against internal pressure may increase. In addition, it may be easier for the internal pressure of the battery to be dispersed.

Referring to FIG. 3, the extension length h1 of the first lead film 14a in a direction parallel to the extension direction (up-down direction when viewed with reference to FIG. 3) of the electrode lead 11 may be approximately 10% to 80% of the width of the sealing portion 13b. When the extension length h1 of the first lead film 14a along the extension direction of the electrode lead 11 satisfies the above-defined range, it may be easier to increase the contact area between the first lead film 14a and the electrode lead 11 and the contact area between the first lead film 14a and the sealing portion 13b, thereby making it easier to secure sealing strength sufficient for normal operation of the battery.

In the present specification, the width of the sealing portion 13b refers to a maximum value of the distance between one end and the other end of the sealing portion 13b along the protruding direction of the electrode lead 11.

Referring to FIG. 3, the extension width h2 of the second lead film 14b in a direction parallel to the extension direction of the electrode lead 11 may be approximately 10% to 50% of the width of the sealing portion 13b. When the extension width h2 of the second lead film 14b satisfies the above-defined range, it may be easier to increase the contact area between the second lead film 14b and the electrode lead 11 and the contact area between the second lead film 14b and the sealing portion 13b, thereby making it easier to secure sealing strength sufficient for normal operation of the battery.

In one embodiment of the present disclosure, the extension length d1 in a direction parallel to the extension direction of the electrode lead 11 in the first region A, where breakage preferentially occurs due to an increase in internal pressure of the battery, may be approximately 10% to 50% of the width of the sealing portion 13b. When the extension length d1 of the first region A satisfies the above-defined range, it is possible to secure sealing strength sufficient for normal operation of the battery, and it may be more easily for breakage to occur in the event of a swelling phenomenon.

In one embodiment of the present disclosure, the extension width d2 in a direction parallel to the extension direction of the electrode lead 11 in the second region B, where breakage occurs, may be approximately 10% to 50% of the width of the sealing portion 13b. When the extension width d2 of the second region B satisfies the above-defined range, it is possible to secure sealing strength sufficient for normal operation of the battery, and it may be more easily for breakage to occur in the event of a swelling phenomenon.

Referring to FIG. 3, the lead film 14 may be approximately K-shaped. For example, the approximately K-shaped lead film 14 may include a pair of first lead films 14a having a shape inclined in opposite directions to each other and a second lead film 14b having a shape extending along a direction approximately parallel to the extension direction of the sealing portion 13b. When the lead film 14 is approximately K-shaped in this way, the contact area between the lead film 14 and the electrode lead 11 may be increased, and the contact area between the lead film 14 and the sealing portion 13b may also be increased, so that the adhesive strength between the electrode lead 11 and the sealing portion 13b increases, thereby making it easier to increase the sealing strength between the electrode lead 11 and the sealing portion 13b. In addition, since the internal pressure is uniformly dispersed throughout the lead film 14, it may be easier to increase the rigidity of the battery against internal pressure.

In addition, while the lead film 14 may be formed in a simple linear shape, the internal pressure of the battery may be more easily dispersed compared to a conventional sealing structure, and the sealing strength may be increased due to an increase in contact area.

In one embodiment of the present disclosure, when the lead film 14 is approximately K-shaped, a portion of the lead film 14 located relatively close to the direction in which the electrode assembly 12 is accommodated may correspond to the first region A. In addition, a portion of the lead film 14 located relatively far from the direction in which the electrode assembly 12 is accommodated may correspond to the second region B. That is, among the regions where the pair of first lead films 14a having a shape inclined in opposite directions to each other and the sealing portion 13b of the case overlap each other, the region in which the fusion is performed may correspond to the first region A. In addition, among the regions where the second lead film 14b having a shape extending in a direction approximately parallel to the extension direction (left-right direction when viewed with reference to FIG. 3) of the sealing portion 13b and the sealing portion 13b of the case overlap each other, the region in which the fusion is performed may correspond to the second region B.

The secondary battery may be a cylindrical, prismatic, or pouch-type secondary battery. Among them, the secondary battery may be a pouch-type secondary battery.

**In** the case of a pouch-type secondary battery, the strength of the pouch case is weak, and as it has various shapes, it tends to be more vulnerable to internal pressure. Accordingly, when the secondary battery according to one embodiment of the present disclosure is a pouch-type secondary battery, it may be more advantageous in terms of safety.

A battery pack (not shown) according to an embodiment of the present disclosure may include a secondary battery according to an embodiment of the present disclosure as described above. The battery pack may include, for example, a plurality of secondary batteries. The plurality of secondary batteries may be electrically connected. The battery pack may include a pack housing (not shown) configured to accommodate the secondary batteries. Meanwhile, the battery pack of the present disclosure may be manufactured through a cell-to-pack process that does not go through a step of manufacturing a battery module including a secondary battery. Alternatively, the battery pack may be manufactured by a process that first manufactures a battery module including a secondary battery and then manufactures a battery pack including at least one such battery module.

A device according to an embodiment of the present disclosure may include a battery pack according to an embodiment of the present disclosure. The device may be, for example, a vehicle powered by a battery pack of the present disclosure. Alternatively, the device may be, for example, an energy storage system (ESS) including a plurality of battery packs of the present disclosure.

### [Reference Signs]

10: secondary battery
11: electrode lead
12: electrode assembly
13a: accommodating portion
13b: sealing portion
14: lead film
A: first region
B: second region
14a: first lead film
14b: second lead film

## Claims

1. A secondary battery (10) comprising:
an electrode assembly (12) to which an electrode lead (11) is attached;
a case accommodating the electrode assembly (12);
a sealing portion (13b) formed to seal the electrode assembly (12) in the case; and
a lead film (14) surrounding a portion of an outer surface of the electrode lead (11) and interposed between the electrode lead (11) and the sealing portion (13b),
wherein the lead film (14) comprises a first region (A) configured to be primarily broken during swelling of the battery and a second region (B) configured to be secondarily broken during swelling of the battery,
wherein the first region (A) and the second region (B) refer to regions in which fusion is performed among the regions where the lead film (14) and the sealing portion (13b) of the case overlap,
wherein a difference in sealing strength is provided between the first region (A) and the second region (B),
wherein the first region (A) is located closer to a portion of the case in which the electrode assembly (12) is accommodated,
and the second region (B) is located farther away from said portion of the case in which the electrode assembly (12) is accommodated.

2. The secondary battery (10) according to claim 1,
wherein the first region (A) is located at one end of the sealing portion (13b) in the inner direction of the case.

3. The secondary battery (10) according to claim 1,
wherein the second region (B) is located at one end of the sealing portion (13b) in the outer direction of the case.

4. The secondary battery (10) according to claim 1,
wherein the first region (A) and the second region (B) are spaced apart from each other along the width direction of the sealing portion (13b), the width direction of the sealing portion (13b) extending parallelly to a protruding direction of the electrode lead (11).

5. The secondary battery (10) according to claim 4,
wherein the lead film (14) is fused to the case in the first region (A) and the second region (B), and is not fused to the case in a region located between the first region (A) and the second region (B).

6. The secondary battery (10) according to claim 5,
wherein the distance between the first region (A) and the second region (B) is 20% to 80% of the width of the sealing portion (13b).

7. The secondary battery (10) according to claim 1,
wherein the lead film (14) comprises:
a first lead film (14a); and
a second lead film (14b) provided separately from the first lead film (14a).

8. The secondary battery (10) according to claim 7,
wherein the first lead film (14a) is located closer to the direction in which the electrode assembly (12) is accommodated, and the second lead film (14b) is located farther away from the direction in which the electrode assembly (12) is accommodated.

9. The secondary battery (10) according to claim 7,
wherein the first region (A) is located in a region where the first lead film (14a) and the sealing portion (13b) overlap, and the second region (B) is located in a region where the second lead film (14b) and the sealing portion (13b) overlap.

10. The secondary battery (10) according to claim 8,
wherein a portion of the first lead film (14a) is located at the end of the sealing portion (13b) in the inner direction of the case.

11. The secondary battery (10) according to claim 8,
wherein a portion of the second lead film (14b) is located at the end of the sealing portion (13b) in the outer direction of the case.

12. The secondary battery (10) according to claim 7,
wherein the first lead film (14a) and the second lead film (14b) are spaced apart from each other along the width direction of the sealing portion (13b).

13. The secondary battery (10) according to claim 8,
wherein the second lead film (14b) has a shape extending along the extension direction of the sealing portion (13b), the extension direction of the sealing portion (13b) being transverse to a protruding direction of the electrode lead (11).

14. The secondary battery (10) according to claim 8,
wherein the first lead film (14a) has a shape extending along a direction forming a predetermined angle with the extension direction of the second lead film (14b), the extension direction of the sealing portion (13b) being transverse to a protruding direction of the electrode lead (11).

## Patentansprüche

1. Sekundärbatterie (10), umfassend: eine Elektrodenanordnung (12), an der ein Elektrodenableiter (11) befestigt ist; ein Gehäuse, das die Elektrodenanordnung (12) aufnimmt; einen Dichtungsabschnitt (13b), der ausgebildet ist, um die Elektrodenanordnung (12) in dem Gehäuse abzudichten; und eine Ableiterfolie (14), die einen Teil einer Außenfläche des Elektrodenableiters (11) umgibt und zwischen dem Elektrodenableiter (11) und dem Dichtungsabschnitt (13b) zwischengeschaltet ist, wobei die Ableiterfolie (14) einen ersten Bereich (A), der so konfiguriert ist, dass er während eines Schwellens der Batterie primär bricht, und einen zweiten Bereich (B), der so konfiguriert ist, dass er während eines Schwellens der Batterie sekundär bricht, umfasst, wobei sich der erste Bereich (A) und der zweite Bereich (B) auf Bereiche beziehen, in denen eine Verschmelzung unter den Bereichen durchgeführt wird, in denen die Ableiterfolie (14) und der Dichtungsabschnitt (13b) des Gehäuses überlappen, wobei ein Unterschied in der Dichtungsfestigkeit zwischen dem ersten Bereich (A) und dem zweiten Bereich (B) vorgesehen ist, wobei der erste Bereich (A) näher an einem Abschnitt des Gehäuses angeordnet ist, in dem die Elektrodenanordnung (12) aufgenommen ist, und der zweite Bereich (B) weiter von dem genannten Abschnitt des Gehäuses entfernt angeordnet ist, in dem die Elektrodenanordnung (12) aufgenommen ist.

2. Sekundärbatterie (10) nach Anspruch 1, wobei der erste Bereich (A) an einem Ende des Dichtungsabschnitts (13b) in der Innenrichtung des Gehäuses angeordnet ist.

3. Sekundärbatterie (10) nach Anspruch 1, wobei der zweite Bereich (B) an einem Ende des Dichtungsabschnitts (13b) in der Außenrichtung des Gehäuses angeordnet ist.

4. Sekundärbatterie (10) nach Anspruch 1, wobei der erste Bereich (A) und der zweite Bereich (B) entlang der Breitenrichtung des Dichtungsabschnitts (13b) voneinander beabstandet sind, wobei sich die Breitenrichtung des Dichtungsabschnitts (13b) parallel zu einer vorstehenden Richtung des Elektrodenableiters (11) erstreckt.

5. Sekundärbatterie (10) nach Anspruch 4, wobei die Ableiterfolie (14) im ersten Bereich (A) und im zweiten Bereich (B) mit dem Gehäuse verschmolzen ist und in einem Bereich, der sich zwischen dem ersten Bereich (A) und dem zweiten Bereich (B) befindet, nicht mit dem Gehäuse verschmolzen ist.

6. Sekundärbatterie (10) nach Anspruch 5, wobei der Abstand zwischen dem ersten Bereich (A) und dem zweiten Bereich (B) 20 % bis 80 % der Breite des Dichtungsabschnitts (13b) beträgt.

7. Sekundärbatterie (10) nach Anspruch 1, wobei die Ableiterfolie (14) umfasst: eine erste Ableiterfolie (14a); und eine zweite Ableiterfolie (14b), die getrennt von der ersten Ableiterfolie (14a) vorgesehen ist.

8. Sekundärbatterie (10) nach Anspruch 7, wobei die erste Ableiterfolie (14a) näher an der Richtung angeordnet ist, in der die Elektrodenanordnung (12) aufgenommen ist, und die zweite Ableiterfolie (14b) weiter von der Richtung entfernt angeordnet ist, in der die Elektrodenanordnung (12) aufgenommen ist.

9. Sekundärbatterie (10) nach Anspruch 7, wobei der erste Bereich (A) in einem Bereich angeordnet ist, in dem die erste Ableiterfolie (14a) und der Dichtungsabschnitt (13b) überlappen, und der zweite Bereich (B) in einem Bereich angeordnet ist, in dem die zweite Ableiterfolie (14b) und der Dichtungsabschnitt (13b) überlappen.

10. Sekundärbatterie (10) nach Anspruch 8, wobei ein Teil der ersten Ableiterfolie (14a) am Ende des Dichtungsabschnitts (13b) in der Innenrichtung des Gehäuses angeordnet ist.

11. Sekundärbatterie (10) nach Anspruch 8, wobei ein Teil der zweiten Ableiterfolie (14b) am Ende des Dichtungsabschnitts (13b) in der Außenrichtung des Gehäuses angeordnet ist.

12. Sekundärbatterie (10) nach Anspruch 7, wobei die erste Ableiterfolie (14a) und die zweite Ableiterfolie (14b) entlang der Breitenrichtung des Dichtungsabschnitts (13b) voneinander beabstandet sind.

13. Sekundärbatterie (10) nach Anspruch 8, wobei die zweite Ableiterfolie (14b) eine Form hat, die sich entlang der Erstreckungsrichtung des Dichtungsabschnitts (13b) erstreckt, wobei die Erstreckungsrichtung des Dichtungsabschnitts (13b) quer zu einer vorstehenden Richtung des Elektrodenableiters (11) ist.

14. Sekundärbatterie (10) nach Anspruch 8, wobei die erste Ableiterfolie (14a) eine Form hat, die sich entlang einer Richtung erstreckt, die einen vorbestimmten Winkel mit der Erstreckungsrichtung der zweiten Ableiterfolie (14b) bildet, wobei die Erstreckungsrichtung des Dichtungsabschnitts (13b) quer zu einer vorstehenden Richtung des Elektrodenableiters (11) ist.

## Revendications

1. Une batterie secondaire (10) comprenant : un ensemble d'électrodes (12) auquel une languette d'électrode (11) est fixée ; un boîtier logeant l'ensemble d'électrodes (12) ; une partie de scellement (13b) formée pour sceller l'ensemble d'électrodes (12) dans le boîtier ; et un film de languette (14) entourant une partie d'une surface extérieure de la languette d'électrode (11) et interposé entre la languette d'électrode (11) et la partie de scellement (13b), dans laquelle le film de languette (14) comprend une première région (A) configurée pour être rompue principalement lors du gonflement de la batterie et une seconde région (B) configurée pour être rompue secondairement lors du gonflement de la batterie, dans laquelle la première région (A) et la seconde région (B) se réfèrent à des régions dans lesquelles une fusion est réalisée parmi les régions où le film de languette (14) et la partie de scellement (13b) du boîtier se chevauchent, dans laquelle une différence de résistance au scellement est prévue entre la première région (A) et la seconde région (B), dans laquelle la première région (A) est située plus près d'une partie du boîtier dans laquelle l'ensemble d'électrodes (12) est logé, et la seconde région (B) est située plus loin de ladite partie du boîtier dans laquelle l'ensemble d'électrodes (12) est logé.

2. La batterie secondaire (10) selon la revendication 1, dans laquelle la première région (A) est située à une extrémité de la partie de scellement (13b) dans la direction intérieure du boîtier.

3. La batterie secondaire (10) selon la revendication 1, dans laquelle la seconde région (B) est située à une extrémité de la partie de scellement (13b) dans la direction extérieure du boîtier.

4. La batterie secondaire (10) selon la revendication 1, dans laquelle la première région (A) et la seconde région (B) sont espacées l'une de l'autre le long de la direction de la largeur de la partie de scellement (13b), la direction de la largeur de la partie de scellement (13b) s'étendant parallèlement à une direction en saillie de la languette d'électrode (11).

5. La batterie secondaire (10) selon la revendication 4, dans laquelle le film de languette (14) est fusionné au boîtier dans la première région (A) et la seconde région (B), et n'est pas fusionné au boîtier dans une région située entre la première région (A) et la seconde région (B).

6. La batterie secondaire (10) selon la revendication 5, dans laquelle la distance entre la première région (A) et la seconde région (B) est de 20 % à 80 % de la largeur de la partie de scellement (13b).

7. La batterie secondaire (10) selon la revendication 1, dans laquelle le film de languette (14) comprend : un premier film de languette (14a) ; et un second film de languette (14b) prévu séparément du premier film de languette (14a).

8. La batterie secondaire (10) selon la revendication 7, dans laquelle le premier film de languette (14a) est situé plus près de la direction dans laquelle l'ensemble d'électrodes (12) est logé, et le second film de languette (14b) est situé plus loin de la direction dans laquelle l'ensemble d'électrodes (12) est logé.

9. La batterie secondaire (10) selon la revendication 7, dans laquelle la première région (A) est située dans une région où le premier film de languette (14a) et la partie de scellement (13b) se chevauchent, et la seconde région (B) est située dans une région où le second film de languette (14b) et la partie de scellement (13b) se chevauchent.

10. La batterie secondaire (10) selon la revendication 8, dans laquelle une partie du premier film de languette (14a) est située à l'extrémité de la partie de scellement (13b) dans la direction intérieure du boîtier.

11. La batterie secondaire (10) selon la revendication 8, dans laquelle une partie du second film de languette (14b) est située à l'extrémité de la partie de scellement (13b) dans la direction extérieure du boîtier.

12. La batterie secondaire (10) selon la revendication 7, dans laquelle le premier film de languette (14a) et le second film de languette (14b) sont espacés l'un de l'autre le long de la direction de la largeur de la partie de scellement (13b).

13. La batterie secondaire (10) selon la revendication 8, dans laquelle le second film de languette (14b) a une forme s'étendant le long de la direction d'extension de la partie de scellement (13b), la direction d'extension de la partie de scellement (13b) étant transversale à une direction en saillie de la languette d'électrode (11).

14. La batterie secondaire (10) selon la revendication 8, dans laquelle le premier film de languette (14a) a une forme s'étendant le long d'une direction formant un angle prédéterminé avec la direction d'extension du second film de languette (14b), la direction d'extension de la partie de scellement (13b) étant transversale à une direction en saillie de la languette d'électrode (11).
